# EUROPEAN PATENT APPLICATION

(11) **EP 4 625 935 A1**
(43) Date of publication of application: **01.10.2025**
(21) Application number: 24209262.5
(22) Date of filing: 28.10.2024
(51) Int. Cl.: H04L 45/121, H04L 45/00, H04L 45/125, H04W 40/12, H04L 12/54, H04L 43/0852

(54) **WIDE AREA NETWORK FLOW PREFERENCE AND ROUTING**

(30) Priority: 25.03.2024 IN 202441023319; 25.07.2024 US 202418783693
(71) Applicant: Cambium Networks Limited, Ashburton, Devon TQ13 7UP (GB)
(72) Inventor: ANKAIAH, Shashi Hosakere, 560037 Bangalore (IN); ATREYA, Vivek Lakshminarayana, 560037 Bangalore (IN); CHAUDHARY, Vaibhav, Illinois 60008 (US)
(74) Representative: EIP

(57) **Abstract**

A network management device for enabling client devices to access services provided over a wide area network, WAN, and a method for network management device are provided. The network management device comprises first and second WAN links and is configured to determine IP address data including an IP address associated with an application server. Latency indications associated with the application server are determined using both the first and second WAN links, and traffic to the application server is routed over one of the first or second WAN links based on a comparison of their respective latency indications.

## Description

### BACKGROUND OF THE INVENTION

### Field of the Invention

The present disclosure relates generally to facilitating communications with services hosted by remote computing devices. In particular, but not exclusively, the present disclosure relates to managing network traffic routing between client devices in a local area network with services hosted on servers accessible over a wide area network.

### Description of the Related Technology

Wireless Fidelity (Wi-Fi) technology that allows electronic devices to connect to a wireless Local Area Network (LAN), using radio waves. It provides the flexibility to access the Internet and network resources without physical cables, making it ideal for mobile devices, laptops, and other portable gadgets. Wi-Fi networks can be found in homes, offices, and many public spaces, offering internet access within a certain range from the Wi-Fi router.

A LAN connects computers and other devices in a relatively small, specific area such as a home, office, or building. It enables the sharing of resources like files, printers, and applications among devices on the same network. LANs are typically wired connections using Ethernet cables but can also be wireless (Wi-Fi), offering flexibility and ease of access to network resources.

Wide Area Networks (WANs) are networks that span large geographic areas, connecting multiple smaller networks like LANs and metropolitan area networks (MANs). The Internet is the largest example of a WAN, connecting millions of computers worldwide. WANs are used by businesses and governments to facilitate long-distance communication, share resources, and provide remote access to their networks. They rely on a range of technologies, including fiber-optic cables, satellite links, and leased lines, to establish connections.

In today's networked world, user devices frequently need to access resources, such as web pages, applications, and services, which are hosted on other devices accessible over wide area networks, such as the internet. Applications, or services, may be hosted on a server and made accessible over a WAN. Hosting an application on a server means that the application's software, data, and related services are stored, run, and managed on a server, which is a powerful computer designed to process requests and deliver data to other computers over a local network or the internet. This setup allows users to access the application via the internet or a private network without needing to install it on their own devices. Here are the key aspects of this concept:

### SUMMARY

According to a first aspect there is provided a network management device for enabling client devices to access services provided over a wide area network, WAN, the network management device comprising: a first WAN link; a second WAN link; at least one processor; and storage on which is stored: application data including an indication of an application for a client device; computer-executable instructions which, when executed by the at least one processor, cause the network management device to: determine IP address data including an IP address associated with an application server hosting resources for the application indicated in the application data; determine, using the IP address, first WAN latency data, comprising a first indication of a latency between the network management device and the application server, over the first WAN link; determine, using the IP address, second WAN latency data, comprising a second indication of a latency between the network management device and the application server, over the second WAN link; in response to receiving a request from a client device to communicate with the application server, select one of the first WAN link or the second WAN link in dependence on the first WAN latency data and the second WAN latency data; and establish a connection with the application server using the selected WAN link.

By dynamically determining WAN link latency for a specific application server, over a plurality of WAN links, it is possible to control WAN link routing in a network management device, such as a router, more accurately for a specific application. Using static host monitoring when testing a WAN link, while enabling latency reduction across a plurality of applications on average, has been found to be provide poor latency management for some specific applications. Testing latency for specific application servers over a WAN link may increase the computational and bandwidth requirements in the network management device, but has been found to enable sophisticated latency management choices to be made across a plurality of applications in a network. For example, the network management device may intentionally select higher latency WAN links for certain applications in order to reduce the latency for specific applications, or application categories. This more sophisticated, latency-based, WAN link selection enables the network management device to prioritize certain applications that are deemed critical, or are preferred.

According to a second aspect there is provided a method for a network management device to enable client devices to access services provided over a wide area network, WAN, the method comprising: determining IP address data including an IP address associated with an application server hosting resources for an application; determining, using the IP address, first WAN latency data, comprising a first indication of latency between the network management device and the application server, over a first WAN link, wherein the first WAN link is configured to enable client devices to communicate with the application server according to a first WAN configuration; determining, using the IP address, second WAN latency data, comprising a second indication of latency between the network management device and the application server, over a second WAN link, wherein the second WAN link is configured to enable client devices to communicate with the application server according to a second WAN configuration; in response to receiving a request from a client device to communicate with the application server, selecting one of the first WAN link and the second WAN link in dependence on the first WAN latency data and the second WAN latency data; and establishing a connection with the application server using the selected WAN link.

According to a third aspect there is provided a non-transitory computer-readable storage medium comprising computer-executable instructions which, when executed by a processor, cause the processor to: determine IP address data including an IP address associated with an application server hosting resources for the application indicated in the application data; determine, using the IP address, first WAN latency data, comprising a first indication of a latency between the network management device and the application server, over the first WAN link; determine, using the IP address, second WAN latency data, comprising a second indication of a latency between the network management device and the application server, over the second WAN link; in response to receiving a request from a client device to communicate with the application server, select one of the first WAN link or the second WAN link in dependence on the first WAN latency data and the second WAN latency data; and establish a connection with the application server using the selected WAN link.

### BRIEF DESCRIPTION OF THE DRAWINGS

Figure 1 is a schematic diagram showing a process for WAN link selection based on monitoring static hosts.
Figure 2 is a schematic diagram showing a network management device configured to enable client devices to access services provided over a wide area network.
Figure 3 is a flow chart showing a method of enabling client devices to access services provided over a wide area network.
Figure 4 is a schematic diagram showing a method of enabling client devices to access services provided over a wide area network as performed by a network management device according to examples.
Figure 5A is a schematic diagram showing a first configuration of wide area network links according to examples.
Figure 5B is a schematic diagram showing a second configuration of wide area network links according to examples.
Figure 5C is a schematic diagram showing a third configuration of wide area network links according to examples.
Figure 6 is a schematic diagram showing a network management device considering bandwidth when selecting a wide area network link.
Figure 7 is schematic diagram showing a method of enabling client devices to access services provided over a wide area network as performed by a network management device for a plurality of applications according to examples.
Figure 8 is a schematic diagram showing a selection of a wide area network link according to examples.
Figure 9 is a schematic diagram showing a selection of a wide area network link according to examples.
Figure 10 is a schematic diagram showing a non-transitory computer-readable storage medium comprising computer-executable instructions for performing a method of enabling client devices to access services provided over a wide area network according to examples.

### DETAILED DESCRIPTION OF CERTAIN INVENTIVE EMBODIMENTS

Wireless-Fidelity (Wi-Fi) networks are used in various environments, including homes, businesses, educational institutions, government organisations, public services, and others. Wi-Fi networks are wireless local area networks (WLAN) that use radio waves to connect devices to each other, and the internet. Wi-Fi is a technology that allows electronic devices like computers, smartphones, and tablets to exchange data wirelessly over a computer network, including highspeed internet connections.

Wi-Fi networks are managed through a combination of hardware devices and software protocols to ensure efficient and secure wireless communication. Wireless Routers and Access Points (APs) are the physical devices that manage the wireless network. Routers and access points control the distribution of data between devices on the local network and the wider internet. They transmit and receive data using radio frequency signals. Some routers and access points allow administrators to manage the network remotely, providing flexibility in configuration and troubleshooting.

One challenge in managing network traffic is to mitigate latency when routing communications from client devices to application servers that are accessed over the internet. Network management devices may include multiple WAN links, enabling them to route over network traffic from client devices to application servers over different WANs, or via different access networks.

Network latency is a critical factor in determining the user experience of web applications. Any application that requires real-time data or interaction such as online gaming, real-time video conferencing, virtual/augmented reality, streaming media etc., benefits from low network latency.

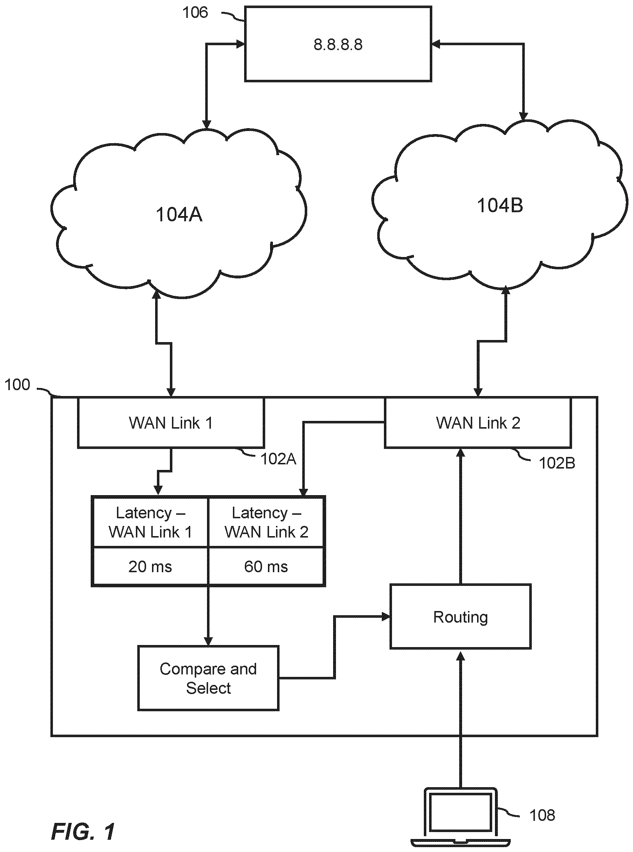

Figure 1 shows an example of a manner in which WAN links may be selected. According to the example of Figure 1, a network management device 100 comprises two WAN links 102A and 102B that are each configured to communicate with web servers over respective WAN configurations 104A and 104B. The network management device 100 determines a latency associated with each of the WAN links by monitoring a static host 106, such as a public server or a dedicated server for latency monitoring. Monitoring the static host 106 may involve determining round trip time to the static host 106 for each of the WAN links 102A and 102B. The round-trip time from each WAN link 102A and 102B is compared and the WAN link with the least round-trip time is selected for traffic routing for the client device 108. The WAN configurations 104A and 104B shown in Figure 1 may each relate to different WANs, different internet service providers, or different routes through the same WAN.

While this approach is able to adapt the routing of network traffic based on general differences between WAN link latency, it has surprisingly been found that this approach is unable to adapt to the highly variable configurations of wide area networks, and the distribution of application servers.

An increasing number of applications provide services that are hosted by application servers over the internet. The latency involved in communicating with these application servers may be vary depending on the location of the application servers, the route through a wide area network to the application server, and internet service providers facilitating network traffic. It has been found that the latency between application servers and the network management device 100 when communicating over any given WAN link 102A can be highly variable. This high variability means that, while the average latency may be managed and/or reduced, the latency of communicating with specific application servers may suffer where the latency to the static host 106 is not representative of the latency to that specific application server.

Certain examples described herein provide devices, methods, and systems that are capable of dynamically evaluating latency over a plurality of WAN links for a plurality of application servers. Network traffic for a given application server may be routed through a WAN link that is determined to provide lower, or the lowest, latency for that specific application server. By dynamically evaluating and selecting WAN links based on latency determinations for specific application servers, it is possible to increase the performance for a plurality of applications when servicing client devices.

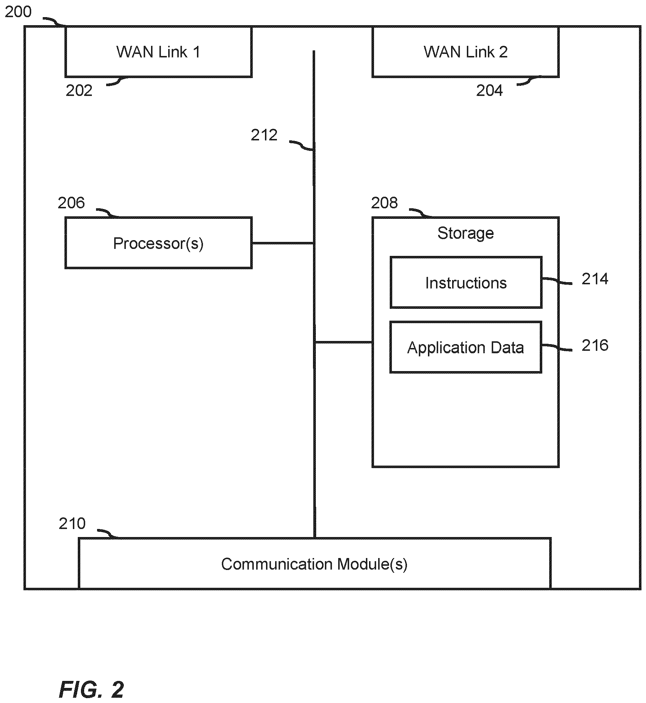

Figure 2 shows an example of a network management device 200 for enabling client devices to access services provided a wide area network. The network management device 200 comprises a first WAN link 202 and a second WAN link 204. The WAN links 202 and 204 each enable the network management device 200 to communicate with servers in a wide area network, such as the internet, according to different WAN configurations.

A WAN configuration in this context may mean that one or more aspects of the WAN link 202 or 204, or the route from the WAN link 202 or 204 to servers in a wide area network, is different. The different WAN configurations may include using different internet service providers, wherein the first WAN link 202 is associated with a first internet service provider and the second WAN link 204 is associated with a second internet service provider.

The WAN links 202 and 204 may be implemented using hardware, software, or a combination of hardware and software. The different WAN configurations route network traffic to application servers differently, for example, using different routes through the wide area network.

The WAN links 202 and 204 may be implemented using separate hardware and/or software components in the network management device 200. For example, the first WAN link 202 may be associated with a first wired connection in the network management device 200 and the second WAN link 204 may similarly be associated with a second wired connection in the network. The wired connections may be different Ethernet ports in the network management device 200.

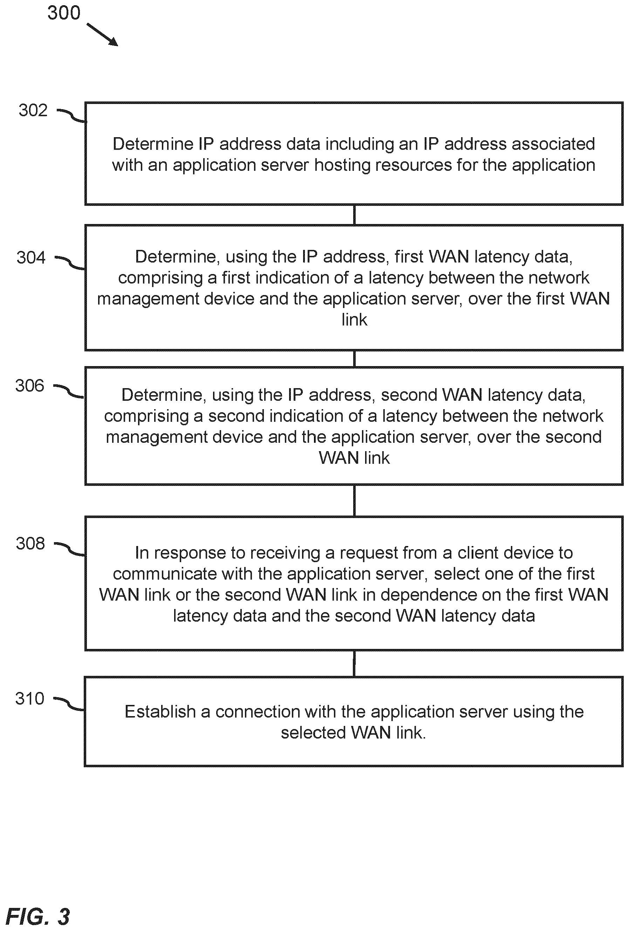

The network management device 200 comprises at least one processor 206, storage 208, and one or more communication modules 210. The WAN links 202 and 204, the processor(s) 206, storage 208, and communication module(s) 210 are connected over a communication channel, such as a bus 212, allowing them to communicate with each other. The storage 208 stores a set of computer-executable instructions 214 for executing a method of enabling client devices to access services provided over a wide area network, which will be described further below with respect to Figures 3 to 9.

The storage 208 may also be suitable for storing other types of data such as application data 216, including an indication of an application. The storage 208 includes any suitable combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g., hard drive) or flash memory (e.g., solid-state drive(s)).

The processor(s) 206 may include any suitable combination of processing circuitry configured to execute the instructions 110. The processor(s) 206 may include one or more general purpose processors, such as central processing units (CPU), and/or application specific processing circuitry or processing units. The one or more communications modules 210 may be configured to enable communication with one or more further computing devices, for example, as part of a network. The communications module(s) 210 may comprise wireless and/or wired communications modules to enable at least one of wired LAN and wireless LAN connectivity. These communications modules 210 may implement known protocols and standards such as Wi-Fi, Bluetooth, Ethernet, and so forth. The network management device 200 may be capable of communicating over both local and wide area networks via the communications module(s) 210.

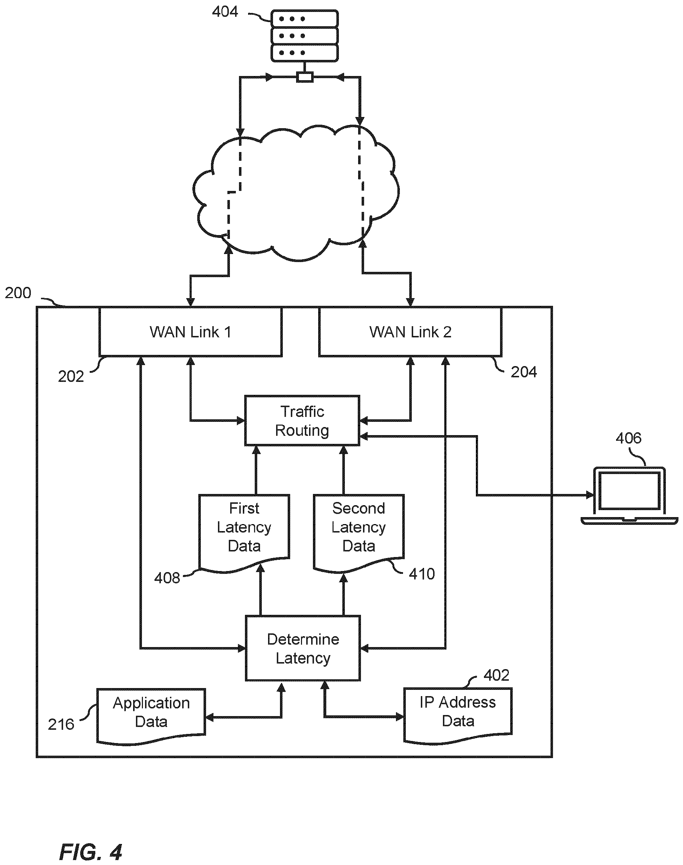

A method 300 of enabling client devices to access services provided over a WAN, performed by the network management device 200, will now be described with respect to Figure 3 and Figure 4. When executing the instructions 214, the network management device 200 determines 302 IP address data 402 associated with an application server 404 hosting resources for an application indicated in application data 216 stored in the network management device 200. To access certain services, such as video calling, online-gaming, messaging, media streaming, and others, client devices 406 may access resources for these services hosted on a respective application server 404. It is noted that the term "application server" is used herein to refer to servers hosting resources for client device 406 to use certain services, however, it is to be appreciated that in other examples the application server 404 may be a host server. A host server hosts resources for the service a client device 406 is accessing, but may not run applications natively on the host server.

The IP address data 402 includes an IP address for the application server 404 that can be used to route traffic from the network management device 200 to the application server 404. The resources hosted by the application server 404 depends on the application, or applications, served by the application server. For example, where the application server 404 is hosting resources for an online game, the applications server 404 may host resources for facilitating client devices 406 to play the online game. The resources may include data or programs for implementing the game and/or traffic routing for connecting with other client device playing the game. Alternative examples of application servers 404 include applications servers facilitating real-time video conferencing, virtual/augmented reality, streaming media such as on demand video streaming, or others.

First WAN latency data 408 is determined 304 by testing the connection with the application server 404 over the first WAN link 202 using the IP address associated with the application server 404. The first WAN latency data 408 comprises a first indication of a latency between the network management device 200 and the application server 404 over the first WAN link 202.

Second WAN latency data 410 is determined 306 by testing the connection with the application server 404 over the second WAN link 204 using the IP address associated with the application server 404. The second WAN latency data 410 comprises a second indication of a latency between the network management device 200 and the application server 404 over the second WAN link 204.

The network management device 200 receives a request from a client device 406 to communicate with the application server 404. For example, where a user logs in to a program, or web-based service, that is facilitated by resources hosted on the application server 404. In response to this request, the network management device 200 selects 308 one of the first WAN link 202 or the second WAN link 204 in dependence on the first WAN latency data 408 and the second WAN latency data 410. A connection is then established with the application server 404 using the selected WAN link. This connection is used to route traffic between the client device 404 and the requested application server 404. It is to be appreciated that the network management device 200 may be said to have other connections with the application server 404 established during the course of the monitoring, or for the purpose of routing traffic for other client devices (not shown).

When selecting 308 one of the first WAN link 202 or the second WAN link 204, the network management device 200 may prioritize a WAN link 202 or 204 that provides the lowest latency between the network management device 200 and the application server 404. Prioritizing, based on latency, may involve selecting the lowest latency WAN link. In other examples, latency may be one of a plurality of criteria based on which a WAN link 202 or 204 is selected. In this case, prioritizing based on latency may involve considering applying greater weight to the latency, over other criteria, when selecting a WAN link 202 or 204.

By determining WAN latency data 408 and 410 for a specific application server 404 over each of the WAN links 202 and 204, it is possible to determine more accurate indications of latency when facilitating communication with the application server 404. In this way, it is possible to ensure that a WAN link 202 or 204 with the lowest latency for connecting to the application server 404 can be identified and selected. While the computational overhead for testing WAN link latency for specific application servers is greater than testing WAN links 202 and 204 using static hosts 106, the increased accuracy in latency determination enables may significantly reduce the latency for client devices. Network latency can be critical in certain implementations and even small reductions in latency may result in large improvements over many application server calls.

The WAN latency data 202 and 204 may be stored in association with the application data 216. In this way, the network management device 200 may be able to readily obtain WAN latency data when a request to access an application is received from a client device 406. The network management device 200, on receipt of the request from the client device 406, may identify a portion of the application data 216 associated with the application server that the client device 406 is attempting to use, identify an associated portion of the first WAN latency data 406 and the second WAN latency data 410 to perform a comparison when selecting 308 a WAN link 202 and 204.

Determining 304 the first WAN latency data 408 and determining the 306 the second WAN latency data 410 may be performed regularly. By regularly determining the WAN latency data 408 and 410, the network management device 200 is able to respond to requests from client devices 406 more quickly. Additionally, the network management device 200 is able to keep up-to-date records of WAN link latency in response to varying WAN conditions such as changes in WAN configuration, application server location, network congestion, and other attributes that may influence latency for a WAN link 202 or 204.

In some cases, determining the first WAN latency data 408 and the second WAN latency data 410 is performed periodically. This may involve determining the WAN latency data 408 and 410 at predetermined time intervals, or during periodic network events. The network management device 200 may determine the WAN latency data 408 at every day, hour, minute, or other suitable time period.

Determining the first WAN latency data 408 and the second WAN latency data 410 may be performed in dependent on a volume of network traffic processed by the network management device 200. During normal operation, the computational resource expenditure of the network management device 200 may fluctuate based on a current volume of network traffic being routed by the network management device 200. Where the network management device 200 is facilitating communication for a large number of client devices 406 to connect to the application server 404 simultaneously, resources such as a processing, storage, and network bandwidth resources may be limited. Accordingly, the network management device 200 may modify the frequency, or regularity, of determining WAN latency data 408 and 410 in dependence on the volume of network traffic. In this way, the network management device 200 may ensure steady routing for the client device 406.

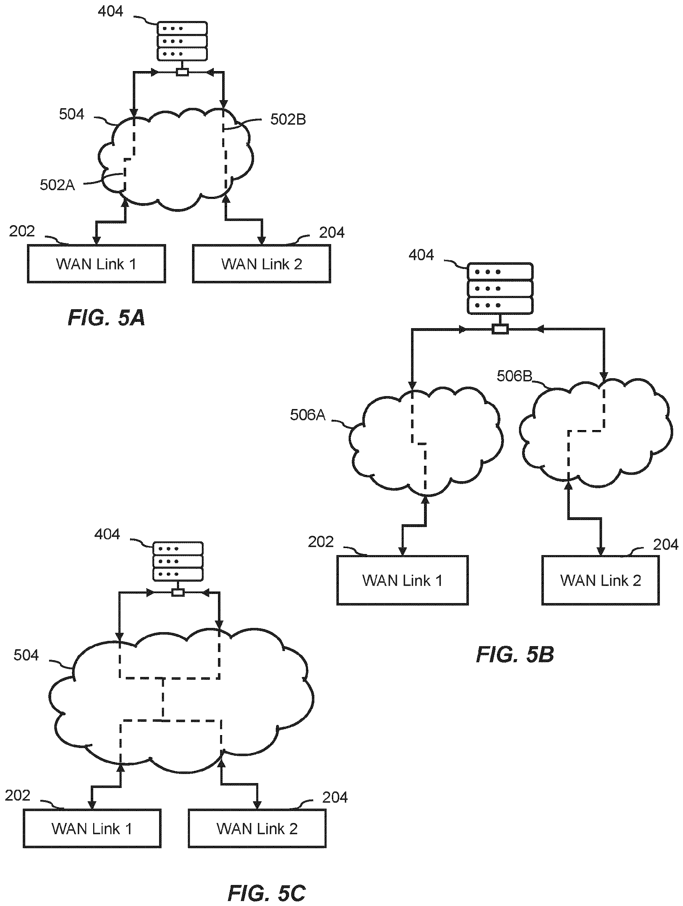

Turning to Figures 5A to 5C, a plurality of examples of WAN configurations, utilized by the WAN links 202 and 204 are shown. In the example of Figure 5A the first WAN link 202 and the second WAN link 204 are configured to route traffic to the application server 404 through mutually exclusive paths 502A and 502B in the wide area network 504. This may be the case where the first WAN link 202 and the second WAN link 204 are associated with different internet service providers and/or otherwise connected to different access networks that forward traffic into the wide area network 504. Different service providers may provide more direct routes to certain application servers 404 than other service providers, this results in lower latency for the more direct routes.

In the example of Figure 5B, the first WAN link 202 and the second WAN link 204 are configured to route traffic to the applications server 404 through different WANs 506A and 506B. For example, the first WAN link 202 is configured to route network traffic through a first WAN 506A, implementing a first set of communication protocols, and the second WAN link 204 is configured to route network traffic through a second WAN 506B, implementing a second, different, set of communication protocols. The first and second WANs 506A and 506B may be implement different generations of a specific communication protocol or standard. In other examples, one WAN 506A may be a wired WAN and the other WAN 506B may be a wireless WAN.

In the example of Figure 5C, the first WAN link 202 and the second WAN link 204 may be configured to route traffic to the application server 404 through a shared WAN 504, according to different routes, wherein the routes 508A and 508B include at least a partially shared portion.

Due to peering agreements between internet service providers, certain internet service providers may exchange traffic with each other. The terms of these peering agreements can change and affect the latency of communicating with application servers 404. Where the application server 404 is hosted by an internet service provider that has a good peering agreement with an internet service provider serving the first WAN link 202, the latency may be low. Where an internet service provider that is serving the second WAN link 204 has a poor peering agreement with the internet service provider hosting the application server 404, the latency may be higher.

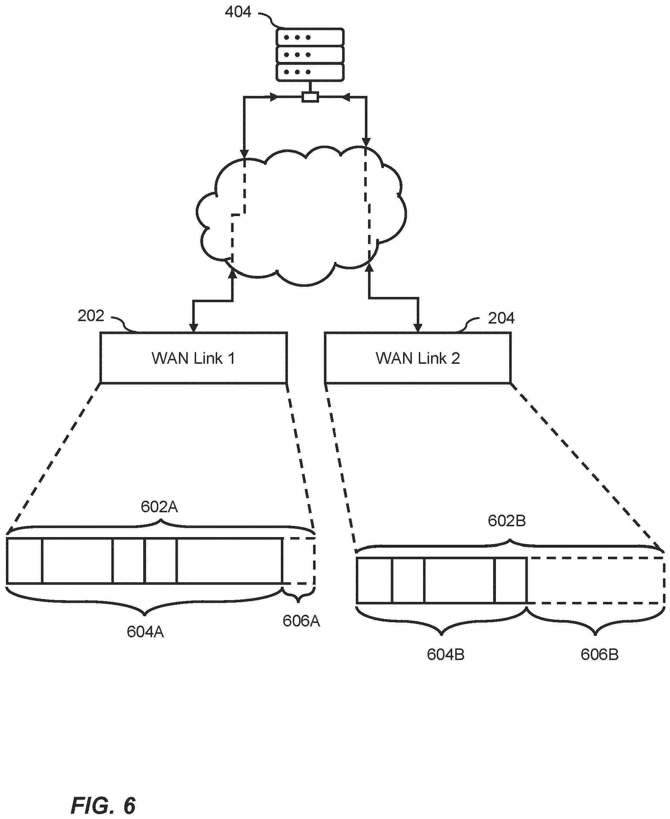

The selection of a WAN link 202 or 204 may be dependent on a bandwidth capacity of each of the WAN links 202 or 204. Figure 6 shows an example of a bandwidth capacity for the first WAN link 202 and the second WAN link 204. Each WAN link 204 and 204 is associated with a total, or maximum, bandwidth capacity 602A and 602B representative of the total volume of traffic that can be routed through the respective WAN link 202 and 204. Each WAN link 202 and 204 has a respective current utilized bandwidth 604A and 604B, representing a current volume of traffic being routed by the respective WAN link 202 and 204. The current utilized bandwidths 604A and 604B may be the cumulative bandwidth used by a plurality of applications. Each WAN link 202 or 204 also has a respective free bandwidth capacity 606A and 606B representing unused bandwidth in the respective WAN link 202 and 204. Selecting a WAN link 202 or 204 for routing traffic to an application server 404 may be dependent on the free bandwidth capacity 606A and 606B of each of the first WAN link 202 and the second WAN link 204.

When determining which of the WAN links 202 or 204 to select 308, the network management device may additionally consider the bandwidth capacity 606A and 606B of each of the first WAN link 202 and the second WAN link 204.

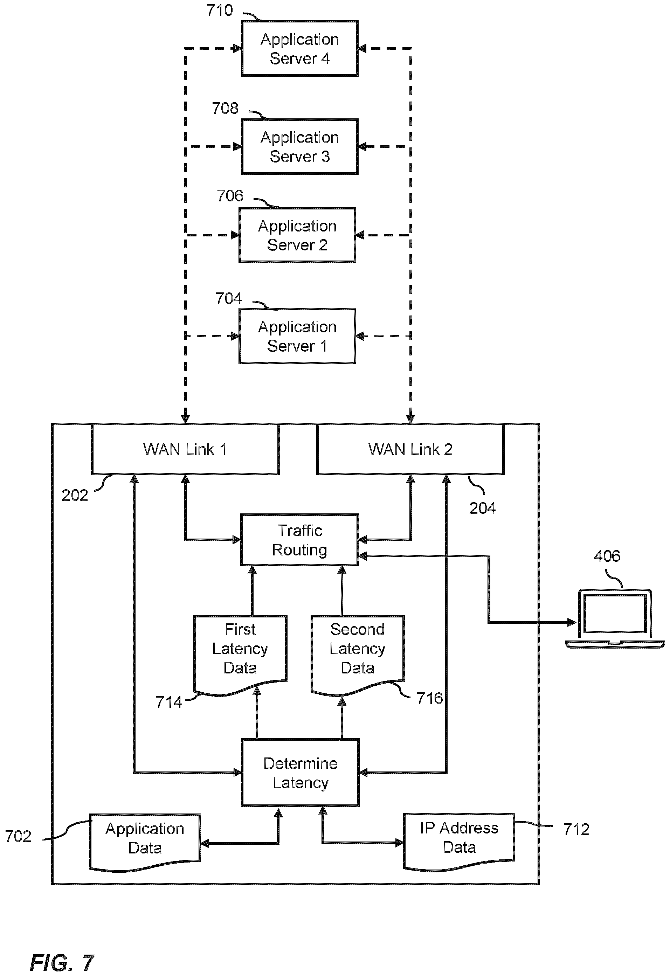

Figure 7 shows an example in which the method 300 may be applied to the management of network traffic for a plurality of applications. In this example, the application data 702 includes an indication, or indications, of a plurality of applications for the client device. Each of the WAN links 202 and 204 are configured to route traffic to a plurality of application servers 704 to 710, each application server 704 to 710 hosting resources for a respective one of the plurality of application indicated in the application data 702.

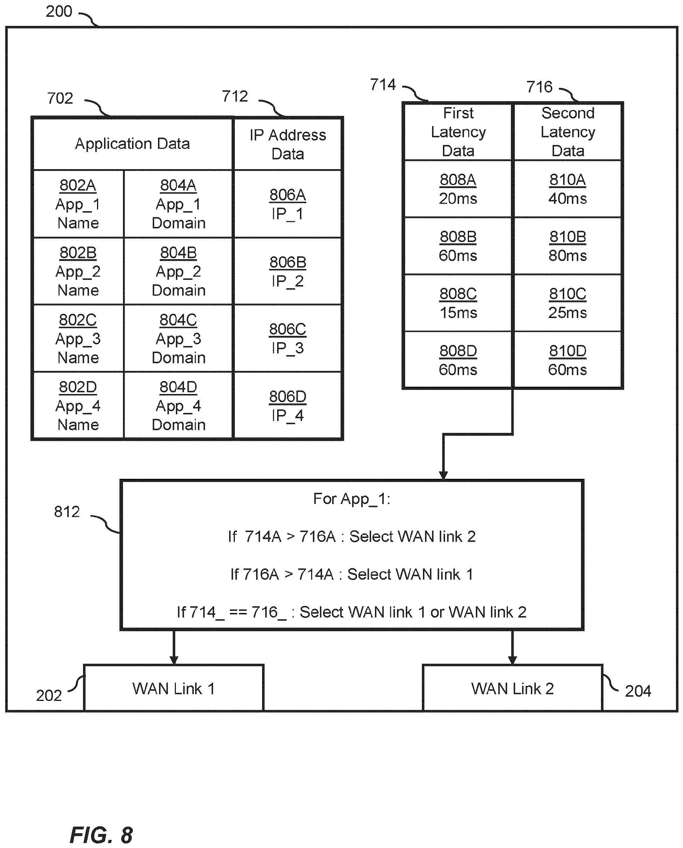

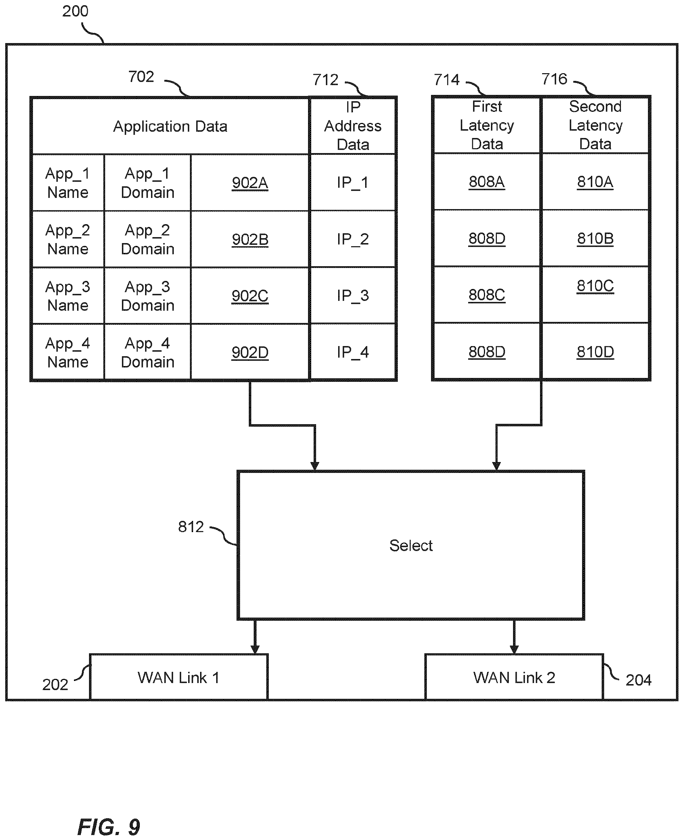

The IP address data 712, in this case, includes a plurality of IP addresses each being associated with a respective application server 704 to 710. The first WAN latency data 714 and the second WAN latency data 716 each comprise a respective plurality of indications of latency. Each indication of latency represents a latency between the network management device and a respective application server 704 to 710 over the respective WAN link 202 or 204. Examples of the application data 702, first WAN latency data 714, and second WAN latency data 716 will be described below with respect to Figures 8 and 9.

Where the network management device 200 is configured to route traffic for a plurality of application servers 704 to 710, the network management device 200 may be configured to select one of the first WAN link 202 or the second WAN link 204 for each of the plurality of applications in dependence on the first WAN latency data 714 and the second WAN latency data 716. In this way, the network management device 200 may tailor the selection of a WAN link 202 or 204 for each specific application.

Figure 8 shows an example in which the application data 702 includes indications of a plurality of applications. Each application is indicated according to an application name 802A to 802D and a respective domain name 804A to 804D used by client devices 406 to request to access, or connect to, the respective application server 704 to 710. The IP address data 712 includes a plurality of IP addresses 806A to 806D each associated with a respective application. The IP address data 712 may be obtained by performing DNS resolution using the associated domain names 804A to 804D. In this context, DNS resolution may involve sending requests to a DNS server to obtain an associated IP address 806A to 806D for the domain name 804A to 804D.

The first WAN latency data 714 and the second WAN latency data 716 include indications 808A to 808B and 810A to 810B of a round-trip time for an associated application server over the respective WAN links 202 and 204. The round-trip time in this example is expressed in milliseconds. It will be appreciated that other indications of latency may be used.

An example of logic 812, implemented by network management device 200 to select a WAN link 202 or 204 is also shown. In this example, when routing traffic to a first application server 704 associated with the first IP address 806A, the network management device 200 may compare a first latency 808A over the first WAN link 202 with a second latency 810A over the second WAN link 204. If the first latency 808A is higher than the second latency 810A, then the network device 200 selects the second WAN link 204 to route traffic to the first application server 704. If the second latency 810A is higher than the first latency 808A, then the network management device 200 selects the first WAN link 202. If the first latency 808A and the second latency 810A are the same, then the network management device 200 may select a WAN link 202 or 204 based on additional criteria, such as bandwidth capacity described above.

In this way, the network management device 200 is capable of managing the bandwidth load of each of the WAN links 202 and 204 while simultaneously prioritizing a selection of the lowest latency WAN link. In some examples, the bandwidth capacity of each of the WAN links 202 and 204 may be compared to an expected bandwidth capacity, or traffic volume.

Turning now to Figure 9, an example is shown in which the application data 702 include indications of application characteristics 902A to 902D for each of the applications. In this example, the selection 308 of the first WAN link 202 or the second WAN link 204 is dependent on the respective application characteristics 902A to 902D. This may provide more flexible, and thereby more adaptive and efficient, routing for network traffic. Various application characteristics may be considered when selecting a WAN link 202 or 204, examples of which are described below.

A first example of an application characteristic 902A to 902D for a given application includes an indication of data packet attributes. Data packets are fundamental units of data transmitted over digital networks. When data is sent from one device to another over the Internet or any other network, it is broken down into smaller, manageable pieces known as packets. These packets navigate the network independently and can take different paths to reach the same destination. Each packet contains several attributes or fields that provide essential information for routing, delivery, and reassembly of the data. Common attributes of data packets include:
Source Address: Indicates where the packet originated from, usually an IP address. Destination Address: Specifies the intended recipient of the packet, typically an IP address;
Payload: The actual data the packet is carrying. This can be part of a web page, an email, an image, etc.;
Sequence Number: Used to properly sequence packets upon arrival, ensuring data is reassembled in the correct order;
Protocol: Indicates the type of protocol used for communication (e.g., TCP, UDP), defining how the data should be processed;
Checksum: A form of error checking. It's a numerical value based on the number of bits in the payload. The receiving device calculates the checksum and compares it with the sent checksum to ensure data integrity;
TTL (Time to Live): A counter that decreases by one each time the packet passes through a router. If TTL reaches zero before the packet arrives at its destination, the packet is discarded. This prevents packets from looping infinitely in the network;
These attributes ensure that data packets are routed efficiently through a WAN, reach their intended destination, and are reassembled correctly and in the right order, allowing for the successful transmission of data across networks.

In some examples, the data packet attributes of communications sent to a given application server 704 to 710 may be dependent on the type of service hosted by the application server 704 to 710. Additionally, the data packet attributes may influence which of the WAN links 202 or 204 are most suitable for routing the respective data. For example, different WAN configurations may be well suited, or configured, to transmit specific types of data packets.

A second example of an application characteristic 902A to 902D for a given application includes an application category. An application category may indicate, for example, the type of content associated with the application server 704 to 710, a type of application provided by the application server 704 to 710, a security characteristic of the application server 704 to 710 on which the application resources are hosted, a utility of the application server 704 to 710, and so forth. Determining an application category for an application may involve requesting categorization data from an external categorization service over the WAN.

When selecting a WAN link 202 or 204, the network management device 200 may prioritize selecting a WAN link 202 or 204 for applications that are associated with a predetermined application category indicated in the application characteristics 902A to 902D. For example, where the network management device 200 is routing traffic for a plurality of applications, the network management device 200 may prioritize selecting the lowest latency WAN link 202 or 204 for applications of a predetermined category and then select WAN links 202 or 204 for the remaining applications without jeopardizing, or interfering, with the routing of data for the applications of the predetermined category.

In this way, the network management device 200 may prioritize low latency WAN links 202 or 204 for specific categories of applications, such as a business, work, or educational applications. This allows the network management device 200 to ensure high performance, and low latency, for applications of selected categories while sacrificing the latency of other application categories. Where the application category is considered as a criterion for selecting a WAN link 202 or 204, the predetermined category of application may be configured in the network management device 200. For example, an administrator may specify that low latency WAN links are prioritized for applications relating to work functions in a business environment. The predetermined category of application may be updated based on an evaluation of performance of network traffic routing in the network management device 200.

A third example of an application characteristic 902A to 902D includes an indication of criticality of a respective application. Certain applications may be considered critical in particular contexts. For example, where the network management device 200 is implemented in an institution such as a school, business, government facility, or factory, critical applications may be those considered to be used to perform core functions in those respective insinuations. In a school, access to online library resources and/or student management services may be considered critical, whereas access to online games may be considered not-critical. When selecting a WAN link 202 or 204, the network management device 200 may prioritize selecting a WAN link for applications that are more critical than other applications, as determined by the application characteristics 902A to 902D.

A fourth example of an application characteristic 902A to 902D includes an indication of usage frequency of the respective application. When selecting a WAN link 202 or 204, the network management device 200 may prioritize selecting a WAN link 202 or 204 for applications that are used more frequently than other applications. In this context prioritizing the selection of WAN link 202 or 204 based on usage frequency may involve selecting a WAN link 202 or 204 for more frequently used applications first, and subsequently selecting a WAN link 202 or 204 for less frequently used applications. I other examples, prioritizing the selection of a WAN link 202 or 204 based on usage frequency may involve selecting lower latency WAN links 202 or 204 for more frequently used applications and higher latency WAN links 202 or 204 for less frequently used applications.

Changes in latency for applications which are used most frequently by client devices are the most noticeable by users. Reducing the latency of a frequently used application may produce the more significant increases in perceived user experience than reducing latency of less frequently used applications. Those applications which are more frequently used may also correlate with applications that are more important for users. For example, in a work environment the most frequently used applications are likely to be those which are key to business functions, such as video calling, email, online transactions, and so forth.

The network management device 200 may be configured to determine the application characteristics 902A to 902D of the applications. An application category may be determined based on domain name categorization of a respective domain name 804A to 804D associated with an application. A criticality of an application may be determined based on domain name categorization or deep packet inspection, wherein deep packet inspection may be used to determine the type, or importance, of the data transmitted. Usage frequency of an application may be determined based on network monitoring, wherein the network management device 200 monitors the frequency of communications sent to the respective application server 704 to 710 and maintains an indication of the monitored frequency.

The network management device 200 may use any one or more of these examples of application characteristic when selecting a WAN link 202 or 204. For example, the application data 702 may include an indication of an application category, criticality, and usage frequency for any one or more of the applications. In some cases, the specific application characteristic 712 stored for each application in the application data 702 may be different.

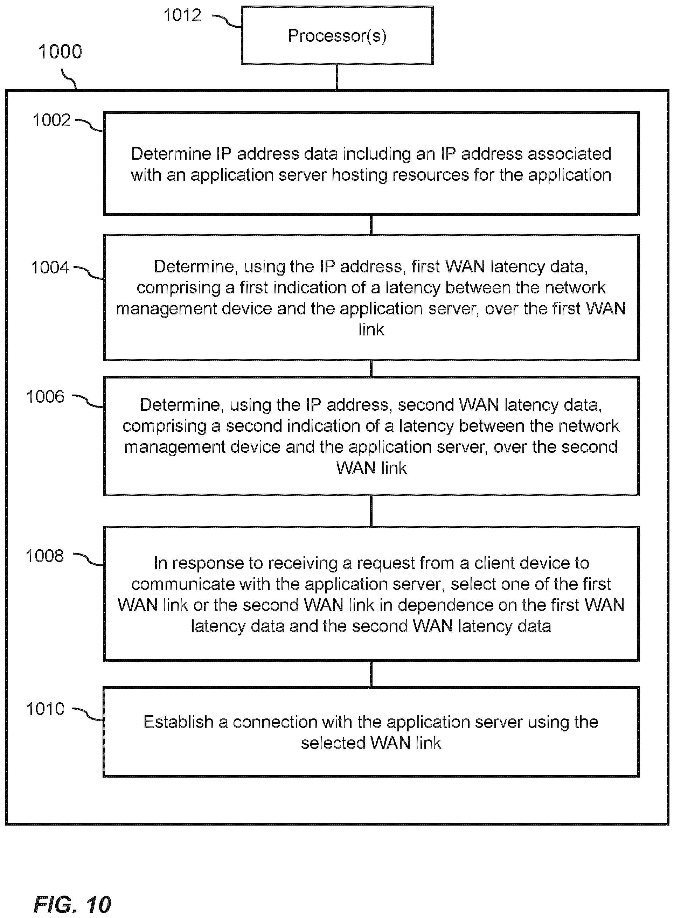

Figure 10 illustrates a schematic diagram of a non-transitory computer-readable storage medium 1000. This medium is configured to store computer-executable instructions 1002 to 1010. When executed by a processor 1012, these instructions 1002 to 1010 enable the implementation of a method 300 of enabling client devices to access services provided over a wide area network. It is to be appreciated that the examples of the method 300 described above also apply to the method as specified in the instructions 1002 to 1010.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A network management device for enabling client devices to access services provided over a wide area network, WAN, the network management device comprising:
a first WAN link;
a second WAN link;
at least one processor; and
storage on which is stored:
application data including an indication of an application for a client device;
computer-executable instructions which, when executed by the at least one processor, cause the network management device to:
determine IP address data including an IP address associated with an application server hosting resources for the application indicated in the application data;
determine, using the IP address, first WAN latency data, comprising a first indication of a latency between the network management device and the application server, over the first WAN link;
determine, using the IP address, second WAN latency data, comprising a second indication of a latency between the network management device and the application server, over the second WAN link;
in response to receiving a request from a client device to communicate with the application server, select one of the first WAN link or the second WAN link in dependence on the first WAN latency data and the second WAN latency data; and
establish a connection with the application server using the selected WAN link.

2. The network management device according to claim 1, wherein the first WAN link is associated with a first wired connection in the network management device, and the second WAN link is associated with a second, different, wired connection in the network management device.

3. The network management device of claim 1 or claim 2, wherein the first WAN link is associated with a first internet service provider and the second WAN link is associated with a second, different, internet service provider.

4. The network management device of any one of claims 1 to 3, wherein the first WAN latency data and the second WAN latency data are stored in association with the application data, and wherein determining the first WAN latency data and determining the second WAN latency data is performed regularly.

5. The network management device of claim 4, wherein determining the first WAN latency data and determining the second WAN latency data is performed:
periodically; or
in dependence on a volume of network traffic processed by the network management device.

6. The network management device of any one of claims 1 to 5, wherein selecting one of the first WAN link or the second WAN link prioritizes a WAN link that provides lowest latency between the network management device and the application server.

7. The network management device of any one of claims 1 to 6, wherein selecting one of the first WAN link and the second WAN link is dependent on the first WAN latency data, the second WAN latency data, a first bandwidth capacity of the first WAN link and a second bandwidth capacity of the second WAN link.

8. The network management device of any one of claims 1 to 7, wherein:
the application data includes an indication of a plurality of applications for the client device;
the IP address data includes a plurality of IP addresses each associated with a respective application server hosting resources for a respective one of the plurality of applications;
the first WAN latency data comprises a first plurality of indications of latency, each of the first plurality of indications of latency representing a latency between the network management device and a respective application server over the first WAN link;
the second WAN latency data comprises a second plurality of indications of latency, each of the second plurality of indications of latency representing a latency between the network management device and a respective application server over the second WAN link; and
wherein the computer-executable instructions, when executed by the at least one processor, cause the network management device to select one of the first WAN link or the second WAN link for each of the plurality of applications in dependence on the first WAN latency data and the second WAN latency data.

9. The network management device of claim 8, wherein each of the plurality of applications is associated with respective application characteristics, and wherein selecting one of the first WAN link and the second WAN link for a said application of the plurality of applications is further dependent on the respective application characteristics.

10. The network management device of claim 9, wherein the application characteristics associated with a said application include any one or more of:
an indication of data packet attributes;
an indication of an application category;
an indication of criticality of the said application; or
an indication of usage frequency of the said application.

11. The network management device of claim 9 or claim 10, wherein the computer-executable instructions, when executed by the at least one processor, causes the network management device to prioritize the selecting of a WAN link, from the first WAN link and the second WAN link, for applications based on their respective application characteristics.

12. The network management device of claim 11, wherein the selecting a WAN link, from the first WAN link and the second WAN link, prioritizes selecting a WAN link for applications that are:
used more frequently than other applications;
associated with a predetermined application category; or
more critical than other applications.

13. The network management device of any one of claims 9 to 12, wherein application characteristics for a said application are stored in the application data in association with an indication of the said application, and the computer-executable instructions, when executed by the at least one processor, cause the processor to:
determine an application category for the said application based on domain name categorization of a respective domain name associated with the said application;
determine a criticality of the said application based on domain name categorization of a respective domain name associated with the said application or deep packet inspection; or
determine usage frequency for a said application based on network monitoring.

14. A method for a network management device to enable client devices to access services provided over a wide area network, WAN, the method comprising:
determining IP address data including an IP address associated with an application server hosting resources for an application;
determining, using the IP address, first WAN latency data, comprising a first indication of latency between the network management device and the application server, over a first WAN link, wherein the first WAN link is configured to enable client devices to communicate with the application server according to a first WAN configuration;
determining, using the IP address, second WAN latency data, comprising a second indication of latency between the network management device and the application server, over a second WAN link, wherein the second WAN link is configured to enable client devices to communicate with the application server according to a second WAN configuration;
in response to receiving a request from a client device to communicate with the application server, selecting one of the first WAN link and the second WAN link in dependence on the first WAN latency data and the second WAN latency data; and
establishing a connection with the application server using the selected WAN link.

15. A non-transitory computer-readable storage medium comprising computer-executable instructions which, when executed by a processor, cause the processor to:
determine IP address data including an IP address associated with an application server hosting resources for the application indicated in the application data;
determine, using the IP address, first WAN latency data, comprising a first indication of a latency between the network management device and the application server, over the first WAN link;
determine, using the IP address, second WAN latency data, comprising a second indication of a latency between the network management device and the application server, over the second WAN link;
in response to receiving a request from a client device to communicate with the application server, select one of the first WAN link or the second WAN link in dependence on the first WAN latency data and the second WAN latency data; and
establish a connection with the application server using the selected WAN link.
